# EUROPEAN PATENT SPECIFICATION

(11) **EP 0 432 153 B1**
(45) Date of publication and mention of the grant of the patent: **28.12.1994**
(21) Application number: 88908893.6
(22) Date of filing: 02.09.1988
(51) Int. Cl.: F23C 5/00, F23Q 9/00, F23D 11/10

(54) **METHOD AND APPARATUS FOR GENERATING HIGHLY LUMINOUS FLAME**
VORRICHTUNG UND VERFAHREN ZUR HERSTELLUNG EINER HOCHLICHTGEBENDEN FLAMME
PROCEDE ET APPAREIL POUR PRODUIRE UNE FLAMME EXTREMEMENT LUMINEUSE

(43) Date of publication of application: 19.06.1991
(73) Proprietor: AMERICAN COMBUSTION, INC., Norcross, GA 30093 (US)
(72) Inventor: GITMAN, Gregory, Michael, Duluth, GA 30136 (US)
(74) Representative: Brunner, Michael John
(86) International application number: US8803047
(87) International publication number: WO9002907

(56) References cited:
- WO-A-86/01131
- DE-A- 2 455 180
- GB-A- 1 074 826
- GB-A- 1 143 117
- US-A- 3 563 683
- US-A- 3 729 285
- US-A- 4 095 929
- US-A- 4 541 796
- PATENT ABSTRACTS OF JAPAN, vol. 9, no. 290 (M-430)[2013], 16th November 1985; & JP-A-60 129 504 (BABCOCK HITACHI K.K.) 10-07-1985
- PATENT ABSTRACTS OF JAPAN, vol. 6, no. 172 (M-154)[1050], 7th September 1982; & JP-A-57 84 905 (HITACHI ZOSEN K.K.) 27-05-1982

## Description

### Technical Field

This invention relates to methods and apparatus for generating highly luminous high temperature, low NOₓ flames using fluid fuels. The methods and apparatus disclosed may be used as the major source of energy and also as an assisting energy source in melting furnaces, industrial heating and heat treating furnaces, kilns, incinerators and other high temperature applications.

### Background Art

Industrial furnaces for high temperature heating (above 982°C (1800°F)) and melting applications commonly use gaseous fuels such as natural gas. When ambient air (especially preheated air) is used as the oxidizer the gaseous flames are normally blue with very low luminosity thus reducing the heat exchange between the flame and the furnace contents. By comparison, luminous oil flames result, in many cases, with as much as 25% less fuel consumption and a decrease in exhaust gas temperatures.

Utilization of oxygen to increase the heating efficiency due to higher flame temperature and the lower volume of flue gases is a well-known combustion approach. However, known methods of introduction of the oxygen into a combustion process through the injection of oxygen into the combustion air, commonly called oxygen enrichment, result in even further reduction of flame luminosity and an increase of NOₓ emissions due to oxidation of nitrogen with oxygen inside the higher temperature flame. The ratio control between fuel flow and enriched air flow is similar to standard fuel/air ratio control. The ratio of total air to total oxygen is normally constant during the heating cycle.

U. S. -A- 3,729,285 to Schwedersky discloses a staged method of gaseous fuel combustion inside the burner tunnel wherein two fuel streams with associated air streams are separately controlled, delivered to the combustion chamber and burned prior to mixing the combustion products together to create a low NOₓ flame. In order to be able to accomplish stable pyrolysis with air, having approximately 78% N₂, inside the burner, the ratio of oxidizer to fuel would have to be at least 75% of stoichiometric to insure adequate heat release during the partial combustion of the fuel being pyrolyzed, since heat stored in the N₂ molecules in the pyrolysis zone will be unavailable for pyrolysis. This diluted flame core reduces flame temperature inside said core, and also has a relatively low air deficiency, eliminating the possibility of significant formation of carbon microparticles of the proper size required to provide adequate flame luminosity. Thus, this invention cannot practically utilize pyrolysis, since most fuel is used to create heat, leaving little fuel to be pyrolyzed.

Carbon microparticles required for maximum emissivity are in the size range of 0.05 to 4.0 microns and the formation of particles in this size range has been shown to be optimized at above 1649°C (3000°F), which is a temperature that is not achievable without a high concentration of oxygen in the oxidizing gas. In the low temperature conditions of Schwedersky excessive hydrocarbon fuels will generate predominately more hydrocarbon radicals than particles of carbon capable of boosting flame luminosity. Also a low flame core temperature significantly reduces the radiative capability of said particles. The flame introduced by the Schwedersky patent has less NOₓ emissions than other flames, but it also has low radiative heat flux due to the low temperature of the flame envelope.

Because the ratio of total oxygen to total fuel is not variable in such systems, the volume of flue gases per Btu at standard conditions is fixed throughout the entire firing cycle. The temperature inside the refractory combustion chamber is slightly reduced due to staged combustion. The Schwedersky Patent also describes a burner utilizing more than one oxidizing stream to stage combustion, but does not have the ability to utilize pure oxygen, as is made clear by the fact that metal as used in the combustion chamber could not survive the temperature of a flame utilizing pure oxygen, nor does it disclose enrichment by or use of pure oxygen.

WO-A-8601131 discloses a method and apparatus for high temperature heating, melting, refining and superheating of materials.

According to the present invention, there is provided a method of combusting combustible material in a burner having a combustion chamber with a staged burner wherein both fuel and air are staged in order to give a fuel-rich primary flame and a fuel-lean secondary flame, the method being characterised by
separately supplying combustible material, a first oxidizing gas having a given oxygen concentration, and a second oxidizing gas having different oxygen concentration from the first oxidizing gas to the burner;
separately directing the first oxidizing gas and a first portion of combustible material into the combustion chamber such that the first portion of combustible material and the first oxidizing gas mix at least partially within the combustion chamber to create a hot oxygen lean luminous flame core;
separately directing a second portion of combustible material and the second oxidizing gas into the combustion chamber such that the second portion of combustible material and the second oxidizing gas mix at least partially within the combustion chamber to create at least one oxygen-rich mixture stream; and
mixing the oxygen lean flame core with the at least one oxygen rich mixture stream to create a final highly luminous flame pattern extending out of the combustion chamber.

According to the present invention, there is also provided a burner for combustion of combustion material to generate a high temperature, high luminosity flame, which comprises:
a combustion chamber having an outlet opening;
means for separately supplying combustion material, a first oxidizing gas having a given oxygen concentration, and a second oxidizing gas having a different oxygen concentration from the first oxidizing gas to the burner;
first means for separately directing the first oxidizing gas and a first portion of combustible material into the combustion chamber such that the portion of combustible material and the first oxidizing gas mix at least partially within the combustion chamber to create a flame core; characterised by:
second means for separately directing a second portion of combustible material and the second oxidizing gas into the combustion chamber such that the second portion of combustible material and the second oxidizing gas mix together at least partially prior to mixing with the flame core, the second means comprising a first plurality of ports arranged around and directed towards the central axis of the combustion chamber, for directing the second portion of combustible material, and a second plurality of ports arranged around and directed towards the central axis of the combustion chamber, for directing the second oxidising gas, the first and second plurality of ports being directed to a location downstream of the location at which the first oxidising gas and the first portion of combustible material mix; and
the combustion chamber having sufficient length to cause the second portion of combustible material and the second oxidizing gas subsequently to mix with the flame core to create the final flame pattern.

The utilization of a high oxygen concentration in the first oxidizing gas makes it possible to boost the temperature of carbon microparticles and the concentration of these particles (due to low flue gas volume), thus significantly increasing the radiative flux from the final flame toward the product being heated. Effective pyrolysis of natural gas must take place with the temperature of the entire pyrolytic zone being maintained in excess of 1316°C (2400°F). Below this temperature, the methane tends to form benzols and other hydrocarbons rather than pure carbon particles. Radiation from pure carbon particles makes a significant contribution to the overall luminosity of the flame produced by the burner described herein. As previously mentioned, these particles must be in the size range of 0.05 - 4.0 microns for maximum radiation in the visible and infrared spectrum. This phenomena dominates at higher temperatures (above 1649°C (3000°F)) such as are present in the burner described herein. This radiation is in addition to the radiation of hot CO₂ and H₂O molecules from the combustion products, which is typical for hydrocarbon fuel flames. By generating additional heat in the space surrounding the pyrolytic zone, the fuel pyrolysis is intensified and the temperature of the microparticles of carbon is increased to create a higher radiation heat flux from the flame pattern.

The additional heat flux of the highly luminous flame results in reduction of the temperature of the products of combustion prior to their contact with the furnace load, which will reduce the oxidation of the load. Therefore, a larger portion of the heat released by combustion may be transferred to the load at a given process temperature due to the higher temperature and luminosity of the flame envelope being produced by the above described simultaneously occurring parallel stage combustion.

The low NOₓ produced by this combustion method is due to the very low nitrogen concentration of the first oxidizing gas (preferably pure oxygen) present inside the flame core where the high concentration of CO and hydrocarbons also prevents nitrogen oxidation. In addition, the plurality of fuel lean flames (diluted, for example, with excess of O₂ and N₂) surrounding said central flame core do not have a large enough flame pattern to raise the temperature inside their individual flame cores above 1482°C (2700°F) and thus to trigger NOₓ formation. The structure of the final flame, having a high temperature central core with a very low concentration of nitrogen, prevents the NOₓ concentration from increasing through the final stage of combustion inside and outside the burner tunnel.

A single fuel source may supply the fuel for both the central fuel-rich and outer fuel-lean flames or mixtures. To mix the fuel with the first and second oxidizing gas streams, the fuel may be introduced through two separately directed nozzle sets, one part being directed to mix with the central flame core, and the other part to mix with the second oxidizing gas surrounding said central zone. The dimensions of the openings introducing the fuel streams and their directions determine their relative volume and the intensity of mixing with the oxidizer. The flame velocity, temperature, and combustion product volume may be varied, for example, at a given heat energy input level through the adjustment of the ratio between air and oxygen in the oxidizing gases, constantly keeping the two fuel flows at a fixed ratio.

Fuel (for example, natural gas) may also be supplied to the burner as two separate streams and in such case the flame characteristics may be varied by separate control of the fuel flows delivered to the burner by separate conduits. When such separation of fuel occurs two different fuels may be used for combustion simultaneously. As an example, liquid fuel may be used in central pyrolysis zone and coke oven gas or natural gas in minor fuel flow peripheral zone.

Where it its desirable to have a lower temperature flame for a particular application, the participation of oxygen should be lower than that required for complete pyrolysis of the fuel. In such cases, the pure oxygen supplied for participation in the combustion process is reduced, for example, to a ratio of pure oxygen/air below 0.2. At such conditions, where less oxygen is available for pyrolysis, the energy balance in the pyrolytic zone may become critical and to support adequate temperature conditions in the pyrolytic zone more fuel is directed to the fuel lean zone, thereby reducing the amount of fuel being pyrolyzed so as to increase the temperature in the pyrolytic zone as well as in the surrounding zone occupied by the fuel lean flames. Thus, the present invention may be used in a broad range of applications where a highly radiative flame is desirable.

The high radiation flux from the pyrolytic zone may raise the temperature inside the combustion chamber to a level where the exposed metal parts inside the combustion chamber will deteriorate. Therefore, liquid cooling of burner parts so exposed may be necessary in certain embodiments of the present invention.

The burner and method of combustion may also be used for incineration of fluid hazardous waste having high or low caloric value. In this case, liquid waste may be introduced instead of one of the fuel streams, preferably the central stream. Oxygen utilization in this case makes the flame pattern hotter and the oxidizing gas more oxygen concentrated, thus improving the thermal destruction efficiency of the flame pattern. Utilization of this approach for low caloric value fuels, such as landfill gas, has similar advantages.

Therefore, it is an object of this invention to provide a combustion process and apparatus for generating a variable high temperature, highly luminous flame with low NOₓ emission by burning gaseous and liquid materials with oxygen and air.

It is a further object of this invention to provide a method and apparatus for simultaneously occurring parallel staged combustion which may be controlled to more efficiently utilize fuel and oxygen in a heating process. These objects and advantages will appear from the following descriptions with reference to the drawings.

### Brief Description of the Drawings

Fig. 1 is a side section view through the center of a burner of a first embodiment of the present invention.

Fig. 2 is a section taken along line 2-2 of Fig. 1.

Fig. 3 is a section taken along line 3-3 of Fig. 1.

Fig. 4 is a side section view of the burner of a second embodiment of the present invention.

Fig. 5 is a side section view through the center of a burner of a third embodiment of the present invention.

Fig. 6 is a side section view through the center of a burner of a fourth embodiment of the present invention.

### Best Mode of Carrying Out the Invention

The preferred embodiments are now described with reference to the drawings, in which like number indicate like parts throughout the views.

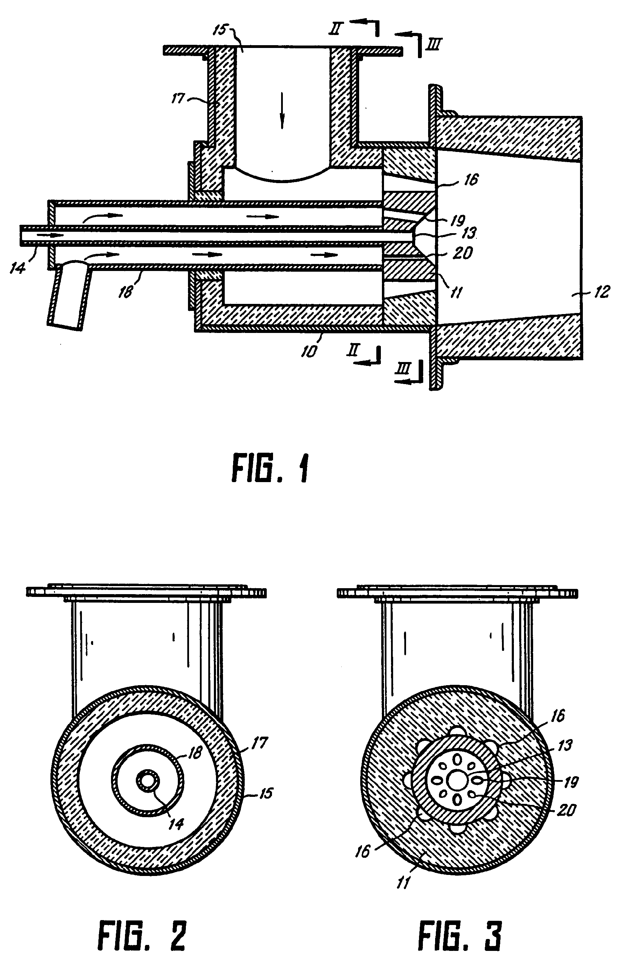

Fig. 1 shows details of a preferred embodiment of the invention. The burner 10 comprises a nozzle assembly 11 which includes ports which direct streams of oxidizer gases and fuel into the combustion chamber 12 for combustion. The combustion chamber 12 in Fig. 1 may be within the wall of the furnace or other apparatus for industrial heating.

Specifically, a high oxygen concentration oxidizer is introduced through central port 13, along the center line of the combustion chamber 12. For instance, pure oxygen or an oxidizing gas containing a higher percentage of oxygen than in air is directed through central tube 14 to port 13. Air or an oxidizing gas having a lower oxygen concentration than the first oxidizer is introduced into the combustion chamber as a second oxidizer stream from air inlet 15 through air inlet port 16, of which there are eight in this embodiment. The air inlet ports 16 are directed about the central axis of the combustion chamber 12 to promote vigorous mixing of the second oxidizing gas with the fuel. Furthermore, the air inlet passages may include insulation 17 when a preheated second oxidizer gas is used.

Fluid fuel, such as natural gas, is introduced from fuel inlet tube 18 which is connected to the fuel ports 19 and 20. Fuel ports 19, of which there are four in this embodiment, are used to introduce streams of the major portion of the fuel toward the first oxidizer to provide vigorous mixing. The ports 20 for the minor fuel flow serve to direct the minor flow of the fuel toward the lower oxygen concentration second oxidizer streams from ports 16. The minor fuel ports 20 will have a smaller cross-section area than ports 19, such that the relative volumes of fuel directed to each oxidizer stream is automatically controlled. Preferably, the minor fuel ports 20 are parallel to the center line of the burner.

In this manner, two distinct flame regimes are established: a hot center core comprised of an oxidizer containing a high O₂ concentration and having a rich fuel/oxidizer ratio, surrounded by a lean fuel/oxidizer mixture comprising an oxidizer containing a lower O₂ concentration mixed with said minor fuel flows.

Fig. 2 is a cross-section through the various oxidizer and fuel inlet passages. The passages are concentric tubes, with inner inlet tube 14 being the high concentration oxidizer supply, middle tube 18 being the fuel supply, and outer tube 15 being the air supply, as discussed above.

Fig. 3 shows a cross-section through the burner face 11 showing the location and relative size of the various ports described above.

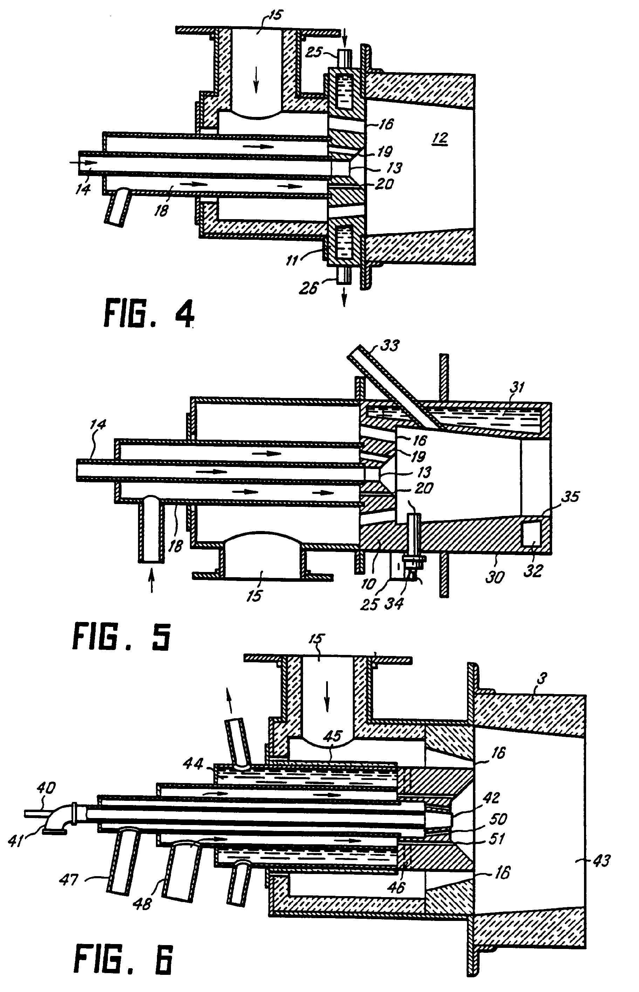

Fig. 4 shows an alternative embodiment of the burner face which includes water cooling. In high temperature applications where the flame temperature required is very high, or where the discharge of the products of combustion will be into a very high temperature process, water cooling of the burner assembly may be necessary. This is shown in Fig. 4 by a water cooling inlet 25 communicating with a water cooling outlet 26. Proper circulation of the water is arranged by appropriate baffles within the nozzle assembly 11.

In Fig. 5 an embodiment of the burner includes a full water cooled combustion tunnel 30, appropriate when an extremely hot high velocity flame is created within the combustion chamber or when the furnace on which the unit is installed can transfer a significant amount of heat back to the burner. Additional features of this embodiment shown in this figure are the water jacket 31 of the combustion tunnel 30, the cooling baffle bypass hole 32, a flame detector channel 33, and a spark plug 34 for ignition. The water cooled nozzle 35 is provided to choke the hot flame generated by the burner to create high velocity. Otherwise the burner is similar to the other configurations previously described.

In Fig. 6, an embodiment of a dual fuel burner design using air preheat is shown. This variation provides the ability to fire fuel oil or other liquids. For instance, oil is introduced through the tube 40, while atomizing gas enters through another tube 41. The oil and atomizing gas flow through the atomizing nozzle 42, which is cooled by contact with the heat conducting burner plate 43, which is in turn cooled by contact with cooling water jacket 44. The conically shaped oil nozzle 42 and attached tubes 40 and 41, can be removed from the rear of the burner for service and inspection. Oxygen enters through ports 50 which are directed towards the center line of the burner. The oxygen is provided to ports 50 through inlet tube 47. Gas, or other fuel, in introduced in inlet 48 to fuel ports 51 which are parallel to the center line of the burner and further away from the center line than oxygen ports 50. Air, which may be preheated, is introduced in inlet 15 and into the burner through ports 16, which direct the air towards the gas within the combustion chamber to form the outer flame cores. Insulation 45 may be provided around the center section of burner to prevent heat loss from preheated air due to contact with the cooling water jacket. An internal bleeding path 46 is provided between inlet tube 47 and inlet 15 for directing some of the pure oxygen into the heated air for oxygen enrichment of the air.

## Claims

1. A method of combusting combustible material in a burner having a combustion chamber (12) with a staged burner wherein both fuel and air are staged in order to give a fuel-rich primary flame and a fuel-lean secondary flame,
separately supplying combustible material (18), a first oxidizing gas (14) having a given oxygen concentration, and a second oxidizing gas (15) having different oxygen concentration from the first oxidizing gas to the burner; the method being characterised by
separately directing (13,19) the first oxidizing gas and a first portion of combustible material into the combustion chamber (12) such that the first portion of combustible material and the first oxidizing gas mix at least partially within the combustion chamber (12) to create a hot oxygen lean luminous flame core;
separately directing (20,16) a second portion of combustible material and the second oxidizing gas into the combustion chamber (12) such that the second portion of combustible material and the second oxidizing gas mix at least partially within the combustion chamber (12) to create at least one oxygen-rich mixture stream; and
mixing the oxygen lean flame core with the at least one oxygen rich mixture stream to create a final highly luminous flame pattern extending out of the combustion chamber (12).

2. A method according to claim 1, wherein the first and second portions of combustible material comprise first and second combustible materials respectively.

3. A method according to claim 1 or claim 2, wherein a multiplicity of oxygen rich mixture streams surround the flame core.

4. A method according to any of the preceding claims, wherein the oxygen concentration of said first oxidizing gas is higher than the oxygen concentration of said second oxidizing gas.

5. A method according to claim 4, wherein said first oxidizing gas is pure oxygen.

6. A method according to claim 4 or claim 5, wherein said second oxidizer is air.

7. A method according to any of the preceding claims, wherein said first oxidizing gas is directed (13) along the centre-line of said combustion chamber (12) and said first portion of combustible material is directed (19) about and toward said first oxidizing gas.

8. A method according to any of the preceding claims, wherein said first oxidizing gas has an oxygen concentration sufficient to cause the flame core temperature to exceed 2400°F (1315°C).

9. A method according to claim 4, which further comprises enriching said second oxidizing gas with said first oxidizing gas prior to combustion by bleeding (46) a portion of said first oxidizing gas into said second oxidizing gas.

10. A method according to any of the preceding claims, which further comprises the step of cooling (11,31,35) a portion of the combustion chamber (12) with a liquid.

11. A method according to claim 2, wherein the first portion of combustible material is gaseous and the second is liquid.

12. A burner for combustion of combustion material to generate a high temperature, high luminosity flame, which comprises:
a combustion chamber (12) having an outlet opening;
means for separately supplying combustion material (18), a first oxidizing gas (14) having a given oxygen concentration, and a second oxidizing gas (15) having a different oxygen concentration from the first oxidizing gas to the burner;
first means (13,19) for separately directing the first oxidizing gas and a first portion of combustible material into the combustion chamber (12) such that the portion of combustible material and the first oxidizing gas mix at least partially within the combustion chamber (12) to create a flame core; characterised by:
second means (20,16) for separately directing a second portion of combustible material and the second oxidizing gas into the combustion chamber (12) such that the second portion of combustible material and the second oxidizing gas mix together at least partially prior to mixing with the flame core, the second means (16,20) comprising a first plurality of ports (20) arranged around and directed towards the central axis of the combustion chamber, for directing the second portion of combustible material, and a second plurality of ports (16) arranged around and directed towards the central axis of the combustion chamber, for directing the second oxidising gas, the first and second plurality of ports being directed to a location downstream of the location at which the first oxidising gas and the first portion of combustible material mix; and
the combustion chamber having sufficient length to cause the second portion of combustible material and the second oxidizing gas subsequently to mix with the flame core to create the final flame pattern.

13. A burner according to claim 12, wherein the first and directing means comprises ports (13,19) through the end of the combustion chamber (12) opposite the outlet opening for communicating with combustible material or oxidizer supply means.

14. A burner according to claim 13, wherein the ports (19,20) communicating with the combustible material supply means (18) have different cross-sectional areas which determine the proportion of combustible material directed toward the first oxidizing gas and the second oxidizing gas within the combustion chamber (12).

15. A burner according to any of claims 12 to 14, wherein the first directing means (13,19) directs the first oxidizing gas in a central stream with the first portion of combustible material directed about the first oxidizing gas.

16. A burner according to claim 15, wherein the second directing means (20,16) directs the mixture of the second oxidizing gas and the second portion of combustible material to surround the central flame core formed by combustion of the first oxidizing gas with the first portion of combustible material.

17. A burner according to any of claims 12 to 16, wherein the combustion chamber (12) comprises a liquid cooled nozzle (35) at its outlet opening.

18. A burner according to any of claims 12 to 17, wherein the portion (11) of the first and second directing means adjacent to the combustion chamber (12) is liquid cooled.

19. A burner according to any of claims 12 to 18, wherein combustion chamber (12) is liquid cooled (31) along its length.

20. A burner according to any of claims 12 to 19, further comprising means (46) for injecting a portion of first oxidizing gas into said second oxidizing gas internally of said burner prior to directing said first and second oxidizing gases into said combustion chamber (12).

21. A burner according to any of claims 12 to 20, having means for supplying first and second different combustible materials as the first and second portions of combustible material.

## Patentansprüche

1. Verfahren zur Verbrennung brennbaren Materials in einem Brenner, der eine Brennkammer (12) mit einem mehrstufigen Brenner aufweist, in dem sowohl Brennstoff als auch Luft abgestuft sind, damit sich eine brennstoffreiche primäre Flamme und eine brennstoffarme sekundäre Flamme ergibt,
wobei brennbares Material (18), ein erstes oxidierendes Gas (14) mit einer gegebenen Sauerstoffkonzentration und ein zweites oxidierendes Gas (15) mit einer von dem ersten oxidierenden Gas abweichenden Sauerstoffkonzentration separat dem Brenner zugeführt werden;
und wobei das Verfahren gekennzeichnet ist durch:
das erste oxidierende Gas und ein erster Teil des brennbaren Materials werden separat in die Brennkammer (12) gerichtet (13, 19), so daß sich der erste Teil des brennbaren Materials und das erste oxidierende Gas zumindest teilweise innerhalb der Brennkammer (12) vermischen, um einen heißen, sauerstoffarmen, lichtgebenden Flammenkern zu erzeugen;
ein zweiter Teil des brennbaren Materials und das zweite oxidierende Gas werden separat in die Brennkammer (12) gerichtet (20, 16), so daß sich der zweite Teil des brennbaren Materials und das zweite oxidierende Gas zumindest teilweise innerhalb der Brennkammer (12) vermischen, um mindestens einen sauerstoffreichen Gemischstrom zu erzeugen; und
der sauerstoffarme Flammenkern wird mit dem mindestens einen sauerstoffreichen Gemischstrom vermischt, um ein endgültiges, stark lichtgebendes Flammenmuster zu erzeugen, das sich aus der Brennkammer (12) herauserstreckt.

2. Verfahren nach Anspruch 1, bei dem die ersten und zweiten Teile des brennbaren Materials jeweils erste und zweite brennbare Materialien umfassen.

3. Verfahren nach Anspruch 1 oder Anspruch 2, bei dem eine Vielzahl von sauerstoffreichen Gemischströmen den Flammenkern umgeben.

4. Verfahren nach einem oder mehreren der vorhergehenden Ansprüche, bei dem die Sauerstoffkonzentration des ersten oxidierenden Gases höher ist als die Sauerstoffkonzentration des zweiten oxidierenden Gases.

5. Verfahren nach Anspruch 4, bei dem das erste oxidierende Gas reiner Sauerstoff ist.

6. Verfahren nach Anspruch 4 oder Anspruch 5, bei dem das zweite oxidierende Gas Luft ist.

7. Verfahren nach einem oder mehreren der vorhergehenden Ansprüche, bei dem das erste oxidierende Gas entlang der Mittelachse der Brennkammer (12) gerichtet (13) ist und der erste Teil des brennbaren Materials auf das erste oxidierende Gas gerichtet (19) ist.

8. Verfahren nach einem oder mehreren der vorhergehenden Ansprüche, bei dem das erste oxidierende Gas eine Sauerstoffkonzentration aufweist, die hinreichend ist, um die Temperatur des Flammenkerns 1315° C (2400° F) übersteigen zu lassen.

9. Verfahren nach Anspruch 4, bei dem weiter das zweite oxidierende Gas vor der Verbrennung mit dem ersten oxidierenden Gas angereichert wird, indem ein Teil des ersten oxidierenden Gases in das zweite oxidierende Gas umgeleitet (46) wird.

10. Verfahren nach einem oder mehreren der vorhergehenden Ansprüche, das weiter den Verfahrensschritt der Kühlung (11, 31, 35) eines Bereichs der Brennkammer (12) mit einer Flüssigkeit umfaßt.

11. Verfahren nach Anspruch 2, bei dem der erste Teil des brennbaren Materials gasförmig ist und der zweite Teil flüssig ist.

12. Brenner zur Verbrennung eines brennbaren Materials, um eine stark lichtgebende Flamme hoher Temperatur zu erzeugen, der folgendes umfaßt:
eine Brennkammer (12) mit einer Auslaßöffnung;
Mittel, um dem Brenner brennbares Material (18) , ein erstes oxidierendes Gas (14) mit einer gegebenen Sauerstoffkonzentration und ein zweites oxidierendes Gas (15) mit einer von dem ersten oxidierenden Gas abweichenden Sauerstoffkonzentration separat zuzuführen;
erste Mittel (13, 19), um das erste oxidierende Gas und einen ersten Teil des brennbaren Materials separat in die Brennkammer (12) zu richten, so daß sich der Teil des brennbaren Materials und das erste oxidierende Gas zumindest teilweise innerhalb der Brennkammer (12) vermischen, um einen Flammenkern zu erzeugen;
gekennzeichnet durch:
zweite Mittel (20, 16), um einen zweiten Teil des brennbaren Materials und das zweite oxidierende Gas separat in die Brennkammer (12) zu richten, so daß sich der zweite Teil des brennbaren Materials und das zweite oxidierende Gas zumindest teilweise vor dem Vermischen mit dem Flammenkern miteinander vermischen, wobei die zweiten Mittel (16, 20) eine erste Mehrzahl von Durchgangsöffnungen (20), die um die Mittelachse der Brennkammer herum angeordnet und auf diese gerichtet sind, um den zweiten Teil des brennbaren Materials auszurichten, sowie eine zweite Mehrzahl von Durchgangsöffnungen (16) umfassen, die um die Mittelachse der Brennkammer herum angeordnet und auf diese gerichtet sind, um das zweite oxidierende Gas auszurichten, wobei die erste und die zweite Mehrzahl von Durchgangsöffnungen auf eine Stelle unterhalb der Stelle gerichtet sind, an der das erste oxidierende Gas und der erste Teil des brennbaren Materials sich miteinander vermischen; und
eine hinreichende Länge der Brennkammer, so daß der zweite Teil des brennbaren Materials und das zweite oxidierende Gas sich anschließend mit dem Flammenkern vermischen, um das endgültige Flammenmuster zu erzeugen.

13. Brenner nach Anspruch 12, bei dem die ersten und ausrichtenden Mittel Durchgangsöffnungen (13, 19) durch das der Auslaßöffnung gegenüberliegende Ende der Brennkammer (12) umfassen, die mit den Zuführungsmitteln für brennbares Material oder Oxidationsmittel in Verbindung stehen.

14. Brenner nach Anspruch 13, bei dem die mit den Zuführungsmitteln (18) für das brennbare Material in Verbindung stehenden Durchgangsöffnungen (19, 20) verschiedene Querschnittsflächen aufweisen, welche das Mengenverhältnis des auf das erste oxidierende Gas und auf das zweite oxidierende Gas gerichteten brennbaren Materials innerhalb der Brennkammer (12) bestimmen.

15. Brenner nach einem oder mehreren der Ansprüche 12 bis 14, bei dem die ersten ausrichtenden Mittel (13, 19) das erste oxidierende Gas in einen zentralen Strom mit dem ersten Teil des brennbaren Materials richten, welcher auf das erste oxidierende Gas gerichtet ist.

16. Brenner nach Anspruch 15, bei dem die zweiten ausrichtenden Mittel (20, 16) das Gemisch des zweiten oxidierenden Gases und des zweiten Teils des brennbaren Materials so ausrichten, daß der durch Verbrennung des ersten oxidierenden Gases mit dem ersten Teil des brennbaren Materials gebildete zentrale Flammenkern umgeben wird.

17. Brenner nach einem oder mehreren der Ansprüche 12 bis 16, bei dem die Brennkammer (12) eine flüssigkeitsgekühlte Düse (35) an ihrer Auslaßöffnung umfaßt.

18. Brenner nach einem oder mehreren der Ansprüche 12 bis 17, bei dem der der Brennkammer (12) benachbarte Bereich (11) der ersten und zweiten ausrichtenden Mittel flüssigkeitsgekühlt ist.

19. Brenner nach einem oder mehreren der Ansprüche 12 bis 18, bei dem die Brennkammer (12) entlang ihrer Länge flüssigkeitsgekühlt (31) ist.

20. Brenner nach einem oder mehreren der Ansprüche 12 bis 19, der weiter Mittel (46) umfaßt, um einen Teil des ersten oxidierenden Gases in dem Brenner in das zweite oxidierende Gas einzuspeisen, bevor das erste und das zweite oxidierende Gas in die Brennkammer (12) gerichtet werden.

21. Brenner nach einem oder mehreren der Ansprüche 12 bis 20, der Mittel zur Zuführung erster und zweiter, voneinander verschiedener brennbarer Materialien als erster und zweiter Teil des brennbaren Materials aufweist.

## Revendications

1. Procédé pour brûler un matériau combustible dans un brûleur comportant une chambre de combustion (12) avec un brûleur scindé en étages, dans lequel le combustible et l'air sont l'un et l'autre scindés en étages pour donner une flamme primaire riche en combustible et une flamme secondaire pauvre en combustible,
pour amener séparément au brûleur le matériau combustible (18), un premier gaz d'oxydation (14) présentant une concentration en oxygène donnée et un second gaz d'oxydation (15) présentant une concentration en oxygène différente de celle du premier gaz d'oxydation; le procédé étant caractérisé par le fait,
que l'on oriente séparément (13, 19), dans la chambre de combustion (12), le premier gaz d'oxydation et une première portion du matériau combustible de façon que la première portion du matériau combustible et le premier gaz d'oxydation se mélangent au moins partiellement à l'intérieur de la chambre de combustion (12) pour créer un coeur lumineux de la flamme, pauvre en oxygène et chaud;
que l'on oriente séparément (20, 16) dans la chambre de combustion (12) une seconde portion du matériau combustible et le second gaz d'oxydation de façon que la seconde portion du matériau combustible et le second gaz d'oxydation se mélangent au moins partiellement à l'intérieur de la chambre de combustion (12) pour créer au moins un flux de mélange riche en oxygène; et
que l'on mélange le coeur de la flamme, pauvre en oxygène, avec le flux de mélange, riche en oxygène, dont il y a au moins un, pour créer une configuration finale de flamme extrêmement lumineuse sortant de la chambre de combustion (12).

2. Procédé selon la revendication 1, dans lequel, la première et la seconde portions de matériau combustible sont respectivement constituées d'un premier et d'un second matériaux combustibles.

3. Procédé selon la revendication 1 ou la revendication 2, dans lequel une multiplicité de flux de mélange riche en oxygène entourent le coeur de la flamme.

4. Procédé selon l'une quelconque des revendications précédentes, dans lequel la concentration en oxygène dudit premier gaz d'oxydation est supérieure à la concentration en oxygène dudit second gaz d'oxydation.

5. Procédé selon la revendication 4 dans lequel ledit premier gaz d'oxydation est de l'oxygène pur.

6. Procédé selon la revendication 4 ou la revendication 5, dans lequel ledit second agent d'oxydation est l'air.

7. Procédé selon l'une quelconque des revendications précédentes, dans lequel ledit premier gaz d'oxydation est orienté (13) le long de l'axe de ladite chambre de combustion (12) et ladite première portion du matériau combustible est orientée (19) autour et en direction dudit premier gaz d'oxydation.

8. Procédé selon l'une quelconque des revendications précédentes, dans lequel ledit premier gaz d'oxydation présente une concentration d'oxygène suffisante pour faire en sorte que la température du coeur de la flamme excède 1315°C (2400°F).

9. Procédé selon la revendication 4, qui consiste en outre à enrichir ledit second gaz d'oxydation avec ledit premier gaz d'oxydation avant la combustion en soutirant (46) une portion dudit premier gaz d'oxydation pour l'envoyer dans ledit second gaz d'oxydation.

10. Procédé selon l'une quelconque des revendications précédentes qui comporte en outre l'étape consistant à refroidir (11, 31, 35) une portion de la chambre de combustion (12) avec un liquide.

11. Procédé selon la revendication 2, dans lequel la première portion du matériau combustible est gazeuse et la seconde est liquide.

12. Brûleur pour la combustion d'un matériau combustible pour générer une température élevée, une flamme extrêmement lumineuse, comportant:
une chambre de combustion (12) présentant une ouverture de sortie;
des moyens pour envoyer séparément dans le brûleur un matériau combustible (18), un premier gaz d'oxydation (14) présentant une concentration en oxygène donnée, et un second gaz d'oxydation (15) présentant une concentration en oxygène différente de celle du premier gaz d'oxydation;
des premiers moyens (13, 19) pour orienter séparément dans la chambre de combustion le premier gaz d'oxydation et une première portion du matériau combustible de façon telle que la portion du matériau combustible et le premier gaz d'oxydation se mélangent au moins partiellement à l'intérieur de la chambre de combustion (12) pour créer un coeur de flamme; caractérisé par:
des seconds moyens (20, 16) pour orienter séparément dans la chambre de combustion (12) une seconde portion de matériau combustible et le second gaz d'oxydation de façon telle que la seconde portion du matériau combustible et le second gaz d'oxydation se mélangent ensemble au moins partiellement avant de se mélanger avec le coeur de la flamme, les seconds moyens (16, 20) comportant au moins une pluralité d'orifices (20) disposés autour de, et orientés vers, l'axe central de la chambre de combustion pour orienter la seconde portion du matériau combustible, ainsi qu'une seconde pluralité d'orifices (16), disposés autour de, et orientés vers, l'axe central de la chambre de combustion, pour orienter le second gaz d'oxydation, la première et la seconde pluralités d'orifices étant orientés vers une position située en aval de la position à laquelle le premier gaz d'oxydation et la première portion du matériau combustible se mélangent;
et la chambre de combustion présentant une longueur suffisante pour faire en sorte que la seconde portion de matériau combustible et le second gaz d'oxydation se mélangent ensuite avec le coeur de la flamme pour créer la configuration finale de la flamme.

13. Brûleur selon la revendication 12, dans lequel les premiers moyens d'orientation comportent, à travers l'extrémité de la chambre de combustion (12) située en face de l'ouverture de sortie, des orifices (13, 9) pour communiquer avec les moyens d'amenée du matériau combustible ou des agents d'oxydation.

14. Brûleur selon la revendication 13, dans lequel les orifices (19, 20) communiquant avec les moyens (18) d'amenée du matériau combustible présentent des aires de section droite différentes qui déterminent la proportion du matériau combustible orientée vers le premier gaz d'oxydation et vers le second gaz d'oxydation à l'intérieur de la chambre de combustion (12).

15. Brûleur selon l'une quelconque des revendications 12 à 14, dans lequel les premiers moyens d'orientation (13, 9) orientent le premier gaz d'oxydation en un flux central, la première portion du matériau combustible étant orientée autour du premier gaz d'oxydation.

16. Brûleur selon la revendication 15, dans lequel les seconds moyens d'orientation (20, 16) orientent le mélange du second gaz d'oxydation et de la seconde portion du matériau combustible pour entourer le coeur central de la flamme formé par la combustion du premier gaz d'oxydation avec la première portion du matériau combustible.

17. Brûleur selon l'une quelconque des revendications 12 à 16, dans lequel la chambre de combustion (12) comporte à son ouverture de sortie une buse (35) refroidie par un liquide.

18. Brûleur selon l'une quelconque des revendications 12 à 17, dans lequel la portion (11) des premiers et des seconds moyens d'orientation adjacente à la chambre de combustion (12) est refroidie par un liquide.

19. Brûleur selon l'une quelconque des revendications 12 à 18, dans lequel la chambre de combustion (12) est refroidie par un liquide (31) sur toute sa longueur.

20. Brûleur selon l'une quelconque des revendications 12 à 19, comportant en outre des moyens (46) pour injecter une portion du premier gaz d'oxydation dans ledit second gaz d'oxydation à l'intérieur dudit brûleur avant d'orienter ledit premier et ledit second gaz d'oxydation dans ladite chambre de combustion (12).

21. Brûleur selon l'une des revendications 12 à 20, présentant des moyens pour amener un premier et un second matériaux combustibles différents en tant que première et seconde portions de matériau combustible.
